# EUROPEAN PATENT SPECIFICATION

(11) **EP 3 865 351 B1**
(45) Date of publication and mention of the grant of the patent: **28.12.2022**
(21) Application number: 21157047.8
(22) Date of filing: 15.02.2021
(51) Int. Cl.: B60R 19/04

(54) **FRONTAL PROTECTION SYSTEM FOR VEHICLES**
FRONTALES SCHUTZSYSTEM FÜR FAHRZEUGE
SYSTÈME DE PROTECTION FRONTAL POUR VÉHICULES

(30) Priority: 17.02.2020 IT 202000003137
(43) Date of publication of application: 18.08.2021
(73) Proprietor: Guidosimplex S.r.l., 00166 Roma (IT)
(72) Inventor: VENTURINI, Fabrizio, 00166 Roma (IT)
(74) Representative: Iannone, Carlo Luigi

(56) References cited:
- EP-A1- 2 251 232
- US-A- 4 413 856

## Description

The present invention relates to a frontal protection system for vehicles, in particular for vehicles belonging to the international categories M1 and N1, even more particularly to vehicles belonging to the M1 category, i.e. automobiles.

International categories M1 and N1 comprise vehicles suitable for the transport of people (M1) while the vehicles belonging to category (N1) have a greater range and are suitable for the transport of things such as goods etc.

Both types of vehicles mentioned above comprise, in accordance with the requirements of international regulations, systems or structures for protection against shocks or impacts with third bodies such as other vehicles, poles or structures.

First of all, reference is made to the bumpers, positioned in the front and lower part of the vehicles, suitable for protecting them in cases of collisions with other vehicles.

Secondly, vehicles also include frontal protection systems, systems or structures additional to those of the bumpers and which are suitable for ensuring a greater protection against damage resulting from a shock.

These protection systems are designed and adapted according to the type of use for which a vehicle is used, and therefore to the type of shocks to which it can be subjected.

For example, a vehicle for use purely in road conditions with difficult conditions, such as off-road vehicles, will need very rigid protections as the risk of shock with objects and rigid bodies is high.

However, when driving vehicles there is not only the risk of shocks with other vehicles or with fixed rigid structures, but it is also possible to collide with pedestrians or passers-by, especially in the case of vehicles for circulation in urban centres.

In this case the main requirement of a frontal protection system changes. The need is no longer rigidity and shock resistance, but elasticity and the possibility of attenuating the shock itself in order to cause the least possible damage to the hit pedestrian.

In this case, such frontal protection systems for rigid vehicles of known type would impact against the pedestrian, entailing a high risk of injury. Furthermore, in this regard, directives have recently been established in Regulation (EC) no.78/2009, amended by Regulation (EU) no.517/2013, which require an increase in the safety of frontal protection systems of vehicles in the event of an impact with pedestrians. Z

The closest prior art document is considered US4413856A which discloses: a frontal protection system for vehicles comprising a coupling body and a protection body , said coupling body comprising two or more coupling elements with a chassis of said vehicle and at least a corresponding number of elastic anchoring elements adapted to the elastic coupling of said coupling body to said protection body.

The object of the present invention is to obviate the aforementioned drawbacks and in particular to devise a frontal protection system for vehicles, in particular for vehicles for urban circulation, which is suitable for impacts with vulnerable road users, such as for example pedestrians or cyclists which can also meet the aforementioned regulatory requirements.

Another object of the present invention is to provide a frontal protection system for vehicles capable of absorbing a large part of the energy released by a shock. A further object of the present invention is to provide a frontal protection system for vehicles which drastically reduces the risk of injury in the event of impact with pedestrians.

These and other objects according to the present invention are achieved by realising a frontal protection system for vehicles as set forth in claim 1.

Further characteristics of the device are the object of the dependent claims.

The characteristics and advantages of a frontal protection system for vehicles according to the present invention will become more evident from the following illustrative and non-limiting description, referring to the appended schematic drawings in which:
- Figure 1 is a top view of an embodiment of the frontal protection system for vehicles according to the present invention;
- Figure 2 is a semi-exploded view of the frontal protection system for vehicles of Figure 1;
- Figure 3 is a further semi-exploded view of the frontal protection system for vehicles of Figure 1;
- Figure 4 is an exploded view of the frontal protection system for vehicles of Figure 1; and
- Figure 5 is a rear perspective view of the frontal protection system for vehicles of figure 1.

With reference to the figures, a frontal protection system for vehicles is shown, indicated as a whole with 10. This system is illustrated in one of its embodiments particularly for automobiles.

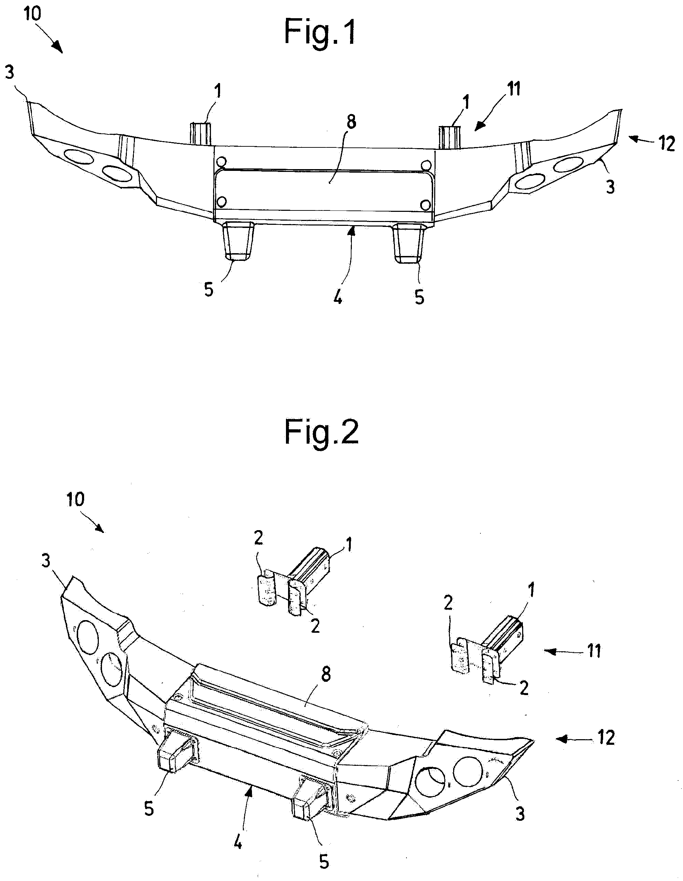

This frontal protection system for vehicles comprises a coupling body 11 and a protection body 12, as visible in Figure 2. The coupling body 11 comprises two or more coupling elements 1 with a chassis of the vehicle and at least a corresponding number of elastic anchoring elements 2, adapted to provide the elastic coupling of the coupling body 11 to the protective body 12.

The protection body 12 comprises a central element 4 of yielding material coupled at two longitudinal ends to two rigid lateral elements 3, suitable for lateral protection of the chassis of the automobile.

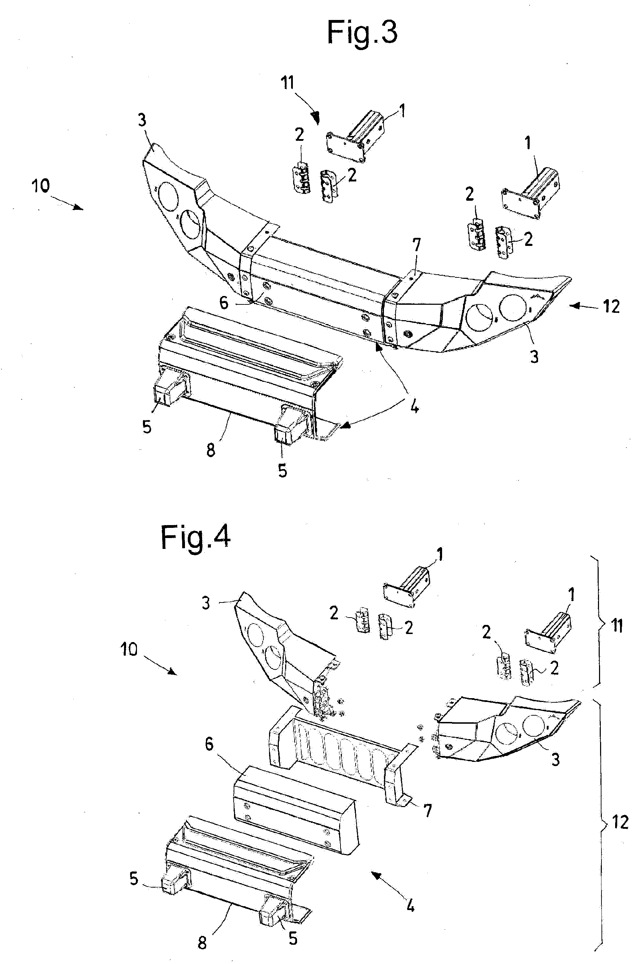

The central element 4 comprises an energy absorber element 6, visible in Figures 3 and 4, suitable for dissipating, through deformation, the energy generated during a shock.

In particular, the central element 4 is of shape, material and thickness designed for the highest possible impact absorption.

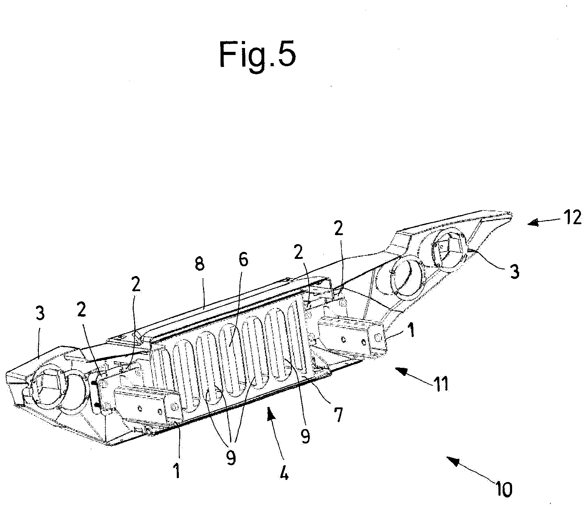

Preferably, as visible in Figure 5, the energy absorber element 6 is not always a full body, but may comprise recesses 9 inside it. Preferably, the recesses 9 are open at the rear side of the energy absorber 6, facing towards the vehicle. This characteristic allows the impact, which instead occurs on a specific point of it, to be distributed over a larger volume.

Furthermore, the central element 4 of the protection system 10 can comprise a structural grid 7 adapted to couple the energy absorber element 6 to the two rigid lateral elements 3, but also to the coupling body 11. This structural grid 7 is also yielding and during an impact it deforms accompanying the energy absorber element 6. The grid 7 is therefore made of a material which allows the deformation thereof, such as aluminum for example.

Preferably, the central element 4 comprises a casing element 8 adapted to fit the energy absorbing element 6, so as to preserve it in the event of minor impacts and protect it from the external conditions to which the vehicle is subjected.

In fact, the absorber element 6, in an optimal embodiment, is made of expanded material, such as for example polyurethane foams, polystyrene / polystyrene. Therefore, the use of a casing element 8 allows to create a protective barrier and to reduce the wear thereof. Said casing 8 is also of yielding material, and adapted to deform with the absorber element 6 in case of impact. Advantageously, as visible in the illustrated embodiment, the two or more coupling elements 1 are two or more longitudinal bars, suitable for the connection with the chassis of the vehicle to which the protection system 10 is associated.

Preferably, the two or more coupling elements 1 are two coupling elements 1, anchored to the chassis so as to be spaced apart from each other, preferably so as to be connected to the two longitudinal ends of the central element 4.

In a preferred embodiment, the protection system 10 comprises a pair of elastic anchoring elements 2 associated with each coupling element 1, this allows a solid anchoring of the central element 4 to the coupling elements 1.

Furthermore, the two or more elastic anchoring elements 2 are elements which extend longitudinally and have a substantially C-shaped section.

Preferably, as visible in the figures, the elastic C-shaped anchoring elements 2 are arranged opposite each other on each coupling element 1.

Preferably, the rigid lateral elements 3 are made of metallic or plastic material. These rigid lateral elements 3 do not present the need to particularly absorb impacts but have the role of protecting the chassis, even if their freedom of movement, thanks to the elastic anchoring elements 2, allows the energy to be dissipated. Finally, the protection system 10 comprises two or more repelling elements 5 suitable for protecting the fixed zones of the chassis of the vehicle. These elements allow both to geometrically reduce the area subjected to the impact, and to collapse during the impact, dissipating the shock energy, preventing too much energy from being discharged at the chassis of the car.

The operation of the frontal protection system for vehicles is as follows.

In the event of a collision or impact with a vulnerable road user, such as a pedestrian at the leg, the central element 4, the absorber element 6 and the structural grid 7 yield and deform around the collided leg. By deforming, they absorb the energy of the shock and reduce the force of impact with the leg itself.

Even the rigid lateral elements 3 allow the dissipation of energy, thanks to the elastic anchoring elements 2 which allow them freedom of movement.

The rigid lateral elements 3, during the shock which occurs in the central part 4, move forward, in the opposite direction to the element which is sent to impact against the frontal protection system; this inversion of the motion of the lateral elements 3 of the system allows a more rapid dissipation of the energy produced by the shock, and it is due to the anchoring of the entire protective body 12 on the elastic elements 2, which in fact, being yieldable, given the particular "C" configuration, constrain the lateral elements 3 to move as if they were hinged on the elements 2.

These elastic elements 2, in this particular embodiment made with a C-section, could be replaced by a guide with a return spring, which allows the protection body 12, in the event of a shock, to move back with respect to the chassis of the vehicle, along these guides made at the elastic elements 2, and to then return, after the shock, to the initial position thanks to return springs. Advantageously, the central element 4, hence the energy absorber element 6, the structural grid 7 and the casing element 8 can be replaced after a shock has occurred. Also the elastic elements 2, if they exhibit a permanent deformation, could be replaced.

From the above description the features of the device object of the present invention, as well as the advantages thereof, are evident.

Finally, it is clear that the device thus conceived is susceptible to many modifications and variants, all falling within the same inventive concept; furthermore, all details can be replaced by equivalent technical elements. In practice, the materials used, as well as the dimensions thereof, can be of any type according to the technical requirements.

## Claims

1. Frontal protection system for vehicles (10) in particular for automobiles, comprising a coupling body (11) and a protection body (12), said coupling body (11) comprising two or more coupling elements (1) with a chassis of said vehicle and at least a corresponding number of elastic anchoring elements (2) adapted to the elastic coupling of said coupling body (11) to said protection body (12), said protection body (12) comprising a central element (4) of yielding material coupled at two longitudinal ends to two rigid lateral elements (3), said central element (4) comprising an energy absorber element (6).

2. Protection system (10) according to claim 1, wherein said central element (4) comprises a structural grid (7) adapted to couple said energy absorber element (6) to said two rigid lateral elements (3).

3. Protection system (10) according to claim 1 or 2 wherein said central element (4) comprises a casing element (8) adapted to fit said energy absorbing element (6) .

4. Protection system (10) according to one of the preceding claims wherein said energy absorbing element (6) is not a full body but comprises one or more recesses (9) inside it.

5. Protection system (10) according to one of the preceding claims wherein said two or more coupling elements (1) are two or more longitudinal bars.

6. Protection system (10) according to one of the preceding claims wherein said two or more coupling elements (1) are two coupling elements (1) anchored to said chassis so as to be spaced apart from each other.

7. Protection system (10) according to one of the preceding claims, **characterized in that** it comprises a pair of elastic anchoring elements (2) associated with each coupling element (1).

8. Protection system (10) according to one of the preceding claims wherein said two or more elastic anchoring elements (2) are elements which extend longitudinally and have a substantially C-section.

9. Protection system (10) according to one of claims 1 to 7 wherein said two or more elastic anchoring elements (2) comprise a guide and a return spring.

10. Protection system (10) according to one of the preceding claims wherein said rigid lateral elements (3) are made of metallic or plastic material.

11. Protection system (10) according to one of the preceding claims, **characterized in that** it comprises two or more repelling elements (5) suitable for protecting the fixed zones of the chassis of said vehicle.

12. Protection system (10) according to one of the preceding claims wherein said absorber element (6) is made of expanded material, for example polyurethane foams, polystyrene / polystyrene.

## Patentansprüche

1. Frontales Schutzsystem für Fahrzeuge (10), insbesondere für Kraftfahrzeuge, umfassend einen Kupplungskörper (11) und einen Schutzkörper (12), wobei der Kupplungskörper (11) zwei oder mehr Kupplungselemente (1) mit einem Fahrgestell des Fahrzeugs und mindestens eine entsprechende Anzahl von elastischen Verankerungselementen (2) umfasst, die zur elastischen Kupplung des Kupplungskörpers (11) mit dem Schutzkörper (12) geeignet sind, wobei der Schutzkörper (12) ein zentrales Element (4) aus nachgiebigem Material umfasst, das an zwei Längsenden mit zwei starren Seitenelementen (3) gekuppelt ist, wobei das zentrale Element (4) ein Energieabsorberelement (6) umfasst.

2. Schutzsystem (10) nach Anspruch 1, wobei das zentrale Element (4) ein strukturelles Gitter (7) umfasst, das dazu geeignet ist, das Energieabsorberelement (6) mit den beiden starren Seitenelementen (3) zu kuppeln.

3. Schutzsystem (10) nach Anspruch 1 oder 2, wobei das zentrale Element (4) ein Karkassenelement (8) umfasst, das dazu geeignet ist, das Energieabsorberelement (6) aufzunehmen.

4. Schutzsystem (10) nach einem der vorstehenden Ansprüche, wobei das Energieabsorberelement (6) kein Vollkörper ist, sondern eine oder mehrere Ausnehmungen (9) in seinem Inneren umfasst.

5. Schutzsystem (10) nach einem der vorstehenden Ansprüche, wobei die zwei oder mehr Kupplungselemente (1) zwei oder mehr Längsstäbe sind.

6. Schutzsystem (10) nach einem der vorstehenden Ansprüche, wobei es sich bei den zwei oder mehr Kupplungselementen (1) um zwei Kupplungselemente (1) handelt, die so am Fahrgestell verankert sind, dass sie voneinander beabstandet sind.

7. Schutzsystem (10) nach einem der vorstehenden Ansprüche, **dadurch gekennzeichnet, dass** es ein Paar von elastischen Verankerungselementen (2) umfasst, die mit jedem Kupplungselement (1) verbunden sind.

8. Schutzsystem (10) nach einem der vorstehenden Ansprüche, wobei die zwei oder mehr elastischen Verankerungselemente (2) Elemente sind, die sich in Längsrichtung erstrecken und einen im Wesentlichen C-förmigen Querschnitt aufweisen.

9. Schutzsystem (10) nach einem der Ansprüche 1 bis 7, wobei die zwei oder mehr elastischen Verankerungselemente (2) eine Führung und eine Rückholfeder umfassen.

10. Schutzsystem (10) nach einem der vorstehenden Ansprüche, wobei die starren Seitenelemente (3) aus Metall oder Kunststoff hergestellt sind.

11. Schutzsystem (10) nach einem der vorstehenden Ansprüche, **dadurch gekennzeichnet, dass** es zwei oder mehr Abstoßelemente (5) umfasst, die dazu geeignet sind, die festen Bereiche des Fahrgestells des Fahrzeugs zu schützen.

12. Schutzsystem (10) nach einem der vorstehenden Ansprüche, wobei das Absorberelement (6) aus geschäumtem Material, z. B. Polyurethanschaum, Polystyrol/Polystyrol, hergestellt ist.

## Revendications

1. Système de protection frontal pour véhicules (10), en particulier pour automobiles, comprenant un corps de couplage (11) et un corps de protection (12), ledit corps de couplage (11) comprenant deux éléments de couplage (1) ou plus avec un châssis dudit véhicule et au moins un nombre correspondant d'éléments d'ancrage élastiques (2) conçus pour le couplage élastique dudit corps de couplage (11) audit corps de protection (12), ledit corps de protection (12) comprenant un élément central (4) de matériau souple couplé au niveau de deux extrémités longitudinales à deux éléments latéraux rigides (3), ledit élément central (4) comprenant un élément absorbeur d'énergie (6).

2. Système de protection (10) selon la revendication 1, dans lequel ledit élément central (4) comprend une grille structurelle (7) conçue pour coupler ledit élément absorbeur d'énergie (6) auxdits deux éléments latéraux rigides (3).

3. Système de protection (10) selon la revendication 1 ou 2 dans lequel ledit élément central (4) comprend un élément boîtier (8) conçu pour recevoir ledit élément d'absorption d'énergie (6).

4. Système de protection (10) selon l'une des revendications précédentes dans lequel ledit élément d'absorption d'énergie (6) n'est pas un corps plein mais comprend un ou plusieurs évidements (9) à l'intérieur de celui-ci.

5. Système de protection (10) selon l'une des revendications précédentes dans lequel lesdits deux éléments de couplage (1) ou plus sont deux barres longitudinales ou plus.

6. Système de protection (10) selon l'une des revendications précédentes dans lequel lesdits deux éléments de couplage (1) ou plus sont deux éléments de couplage (1) ancrés audit châssis de façon à être espacés l'un de l'autre.

7. Système de protection (10) selon l'une des revendications précédentes, **caractérisé en ce qu'**il comprend une paire d'éléments d'ancrage élastiques (2) associés à chaque élément de couplage (1).

8. Système de protection (10) selon l'une des revendications précédentes dans lequel lesdits deux éléments d'ancrage élastiques (2) ou plus sont des éléments qui s'étendent longitudinalement et possèdent une section sensiblement en forme de C.

9. Système de protection (10) selon l'une des revendications 1 à 7 dans lequel lesdits deux éléments d'ancrage élastiques (2) ou plus comprennent un guide et un ressort de rappel.

10. Système de protection (10) selon l'une des revendications précédentes dans lequel lesdits éléments latéraux rigides (3) sont constitués de matériau métallique ou plastique.

11. Système de protection (10) selon l'une des revendications précédentes, **caractérisé en ce qu'**il comprend deux éléments répulsifs (5) ou plus appropriés pour protéger les zones fixes du châssis dudit véhicule.

12. Système de protection (10) selon l'une des revendications précédentes dans lequel ledit élément absorbeur (6) est constitué de matériau expansé, par exemple de mousses polyuréthane, de polystyrène/polystyrène.
